# EUROPÄISCHE PATENTSCHRIFT

(11) **EP 3 511 251 B1**
(45) Veröffentlichungstag und Bekanntmachung des Hinweises auf die Patenterteilung: **18.08.2021**
(21) Anmeldenummer: 19151580.8
(22) Anmeldetag: 14.01.2019
(51) Int. Cl.: B64F 1/315

(54) **FLUGZEUGTREPPE**
AIRCRAFT STAIRS
ESCALIER POUR AÉRONEF

(30) Priorität: 12.01.2018 DE 102018100641
(43) Veröffentlichungstag der Anmeldung: 17.07.2019
(73) Patentinhaber: Krämer GmbH, 72555 Metzingen (DE)
(72) Erfinder: Losch, Max, 72820 Sonnenbühl-Genkingen (DE)
(74) Vertreter: Jeck, Anton

(56) Entgegenhaltungen:
- EP-A2- 0 901 965
- CN-A- 101 982 373
- CN-Y- 201 128 482
- DE-A1- 4 101 430
- DE-U1- 29 514 941
- GB-A- 2 193 174

## Beschreibung

Die Erfindung betrifft eine Flugzeugtreppe nach Anspruch 1.

Fahrzeuge mit aufgesetzten Fluggasttreppen, die über das Rollfeld zu Flugzeugen gefahren und dort an die hochgelegenen Eingänge- bzw. Ausgänge der Flugzeuge angestellt werden, sind bekannt. Sie weisen oft Kabinen auf, in denen ein Fahrer eine Antriebs- und Lenkvorrichtung der Treppe betätigt und das Fahrzeug mit dem Treppenaufsatz steuert. Nachdem das Fahrzeug seine betriebsgemäße Position in Bezug auf das Flugzeug eingenommen hat, wird der Fahrer von einem Dritten zurück in die Flughalle gefahren.

Kleinere Fluggasttreppen werden in der Regel mittels eines Schleppers zum Flugzeug geschleppt, etwa 30 m vom Flugzeug weg abgestellt und sodann zum Flugzeug in ihre Betriebsposition von Hand verschoben, da in unmittelbarer Nähe zu einem Flugzeug nur Schrittgeschwindigkeit, ca. 5 km/h, erlaubt ist und das Manövrieren mit einem Anhänger eine erhöhte Schwierigkeit darstellt. Bei Flugzeugtreppen von mehr als 1,5 t Gewicht kann dies kraftraubend und aufwendig sein. Darüber hinaus erlauben internationale Bestimmungen das Verschieben von Flugzeugtreppen nur bis zu einem Grenzgewicht, welches von den meisten Anhängertreppen überschritten wird.

Die DE 295 14 941 U1 offenbart eine Flugzeugtreppe mit fünf Rädern. Zwei der Räder sind starr und antriebslos, eines der Räder ist ein angetriebenes Rad und starr in seiner Ausrichtung und zwei der Räder sind über eine gemeinsame Deichsel beschränkt entlang individueller Vertikalachsen verschwenkbar.

Die GB 2 193 174 A offenbart eine Flugzeugtreppe mit fünf Rädern, von welchen 2 starr in ihrer Ausrichtung und antriebslos sind, ein angetriebenes Rad starr ausgerichtet ist und zwei der Räder an einer Deichsel um eine gemeinsame Vertikalachse verschwenkbar gelagert sind.

Aus der EP 0 901 965 A2 geht eine Flugzeugtreppe mit fünf Rädern hervor, von welchen zwei antriebslos und starr in ihrer Ausrichtung vorgesehen sind, zwei antriebslos und frei um eine Vertikalachse drehbar vorgesehen sind und ein angetriebenes Rad vorgesehen ist, welches um eine Vertikalachse ausrichtbar ist.

Die CN 101 982 373 A offenbart ein Einstiegsfahrzeug mit einer automatischen Einstiegs-Treppenanordnung, die auf einer Oberseite einer elektrischen Kfz-Fahrgestellanordnung angeordnet ist. Ein Hauptmotor der Fahrgestellanordnung umfasst einen bürstenlosen Gleichstrommotor.

Ausgehend von dem obigen Stand der Technik, liegt der Erfindung die Aufgabe zugrunde, hier Abhilfe zu schaffen und die gattungsgemäße Flugzeugtreppe ohne unangemessenen konstruktiven Aufwand so weiterzubilden, dass deren Handhabung mit minimalem Kraftaufwand möglich ist.

Die gestellte Aufgabe wird erfindungsgemäß durch die Merkmale des Anspruchs 1 gelöst.

Erfindungsgemäß ist vorgesehen, dass eine steuerbare Antriebsvorrichtung mit zwei Rädern zusammenarbeitet.

Weitere zweckmäßige und vorteilhafte Ausgestaltungen der Erfindung gehen aus den Unteransprüchen hervor.

Nach einer bevorzugten Weiterbildung der Erfindung ist es vorgesehen, dass die Antriebsvorrichtung für jedes angetriebene Rad mindestens einen Antrieb aufweist, welcher vorzugsweise in das jeweilige Rad integriert ist. Der Antrieb für das jeweilige Rad kann erfindungsgemäß auch ein Antrieb sein, der mehrere Räder antreibt, wobei der Antrieb eine individuelle Ansteuerung der einzelnen Räder ermöglicht.

Besonders bevorzugt ist es nach einer Weiterbildung der Erfindung, dass der mindestens eine Antrieb individuell ansteuerbar und/oder von dem jeweiligen Rad entkoppelbar ist. Durch das individuelle Ansteuern der einzelnen Räder kann eine Ausrichtung und/oder eine Richtungsänderung beim Fortbewegen der Flugzeugtreppe ermöglicht sein. Vollzieht zum Beispiel ein linkes angetriebenes Rad eine schnellere Umdrehung als ein rechtes angetriebenes Rad, vollzieht die Treppe eine Rechtskurve nach.

Erfindungsgemäß ist vorgesehen, dass die zwei angetriebenen Räder in ihrer Ausrichtung fest sind, und, dass mindesten ein Rad ohne Antrieb frei drehbar ausgebildet ist. Erfindungsgemäß sind die beiden angetriebenen Räder in ihrer Ausrichtung starr vorzusehen, da so durch unterschiedliches/individuelles Antreiben der einzelnen Räder eine Richtungsänderung in besonders einfacher Weise bewirkbar ist. Die nicht angetriebenen Räder dienen insbesondere zum Abstützen beziehungsweise Austarieren der Flugzeugtreppe und vollziehen den Richtungswechsel oder eine Drehung der Flugzeugtreppe, insbesondere auf Grund ihrer freien Drehbarkeit, nach.

Eine besonders zweckmäßige Weiterbildung der Erfindung besteht darin, dass das mindestens eine antriebslose Rad mit einer lösbaren Dreh- und/oder Rollsperre ausgebildet ist. Sobald die Flugzeugtreppe in ihrer finalen Position, beispielsweise am Flugzeug oder in einer Parkposition, angekommen ist, ist es zweckdienlich, eine weitere Bewegung dieser frei beweglichen Räder einzuschränken beziehungsweise zu verhindern. Hierdurch kann einer ungewollten Positionsveränderung der Treppe vorgebeugt werden. Zwar können die einzelnen angetriebenen Räder bereits durch ein Stilllegen der Antriebsbewegung in ihrer Position festgelegt sein, dennoch kann eine Arretierung der angetriebenen Räder vorgesehen sein, welche alternativ oder zusätzlich zu dem Antrieb eine Rollbewegung der angetriebenen Räder verhindern kann.

Eine vorteilhafte Weiterbildung der Erfindung besteht darin, dass eine Steuervorrichtung vorgesehen ist, welche mit der Antriebsvorrichtung steuernd in Verbindung steht und als Steuermittel einen Sender sowie einen Empfänger aufweist, wobei der Sender mit einer Schalttafel ausgebildet ist. Der Empfänger kann an der Flugzeugtreppe vorgesehen sein oder zumindest mit dieser in Verbindung stehen. Der Empfänger kann ein Signal des Senders empfangen und an die Steuervorrichtung weiterleiten, welche das Signal in eine Ansteuerung der einzelnen angetriebenen Räder übersetzen kann. Hierdurch kann die Bewegung der Flugzeugtreppe manuell über den Sender bestimmt und/oder verändert beziehungsweise gesteuert werden. Die Steuervorrichtung kann mit der Antriebsvorrichtung in Verbindung stehen und ausgebildet sein, die einzelnen Antriebe individuell anzusteuern und hierdurch ein Vor oder Zurück, eine Richtungsänderung oder den Stillstand der Flugzeugtreppe zu bewirken. Die Ansteuerung der Antriebsvorrichtung beziehungsweise der einzelnen Antriebe erfolgt auf Grund der über den Sender übermittelten Signale.

Besonders bevorzugt ist es vorgesehen, dass die Schalttafel als Handsteuergerät ausgebildet ist. Diese kann eine besonders genaue Steuerung der Flugzeugtreppe durch das Personal ermöglichen. Die Schalttafel kann einzelne Steuerelemente aufweisen, welche eine Richtungsänderung beziehungsweise eine Bewegung der Flugzeugtreppe bei entsprechender Bedienung bewirken können.

Besonders zweckmäßig ist es, dass der Empfänger als Funkempfänger und die Schalttafel als Fernsteuervorrichtung ausgebildet sind. Die Trennung von Flugzeugtreppe und Sender, insbesondere der Schalttafel, ermöglicht ein Manövrieren der Flugzeugtreppe von einem beliebigen Punkt aus, an welchem die steuernde Person sich befindet, wobei die bedienende Person der Flugzeugtreppe nicht hinterher laufen muss.

Besonders bevorzugt ist die Fernsteuervorrichtung ein Mobiltelefon. Die Schalttafel kann beispielsweise in Form einer mobilen Applikation (App) auf dem Display eines tragbaren Gerätes, wie beispielsweise einem Mobiltelefon, einem Tablett oder einem sonstigen tragbaren Gerät mit Touchscreen, dargestellt sein, wobei die Steuerung durch entsprechende Berührung des Displays, insbesondere an auf dem Display abgebildeten Schaltelementen, bewirkbar ist.

Nach einer Weiterbildung der Erfindung ist es vorgesehen, dass der Antrieb für die angetriebenen Räder ein Elektro- oder Verbrennungsmotor ist. Grundsätzlich kann jeder beliebige Antrieb für die Flugzeugtreppe vorgesehen sein, welcher eine separate Ansteuerung beziehungsweise einen individuellen Antrieb der einzelnen Räder ermöglicht. Besonders bevorzugt ist ein Elektromotor vorgesehen, da es sich grundsätzlich um Kurzstrecken handelt, die der abgekoppelte Flugzeugtreppenanhänger zurücklegen muss. Über entsprechende Solarpaneele an der Flugzeugtreppe, die eine vorgesehene Batterie an der Flugzeugtreppe aufladen, kann diese beim Rangieren und der Annäherung an das Flugzeug energieautark betrieben werden. Vorzugsweise ist die Batterie für den Elektromotor zusätzlich mit einem Anschluss für eine Stromverbindung, beispielsweise zu einem Stromnetz, ausgebildet. Grundsätzlich kann der Motor, insbesondere der Elektromotor, jeweils einem Rad zugeordnet sein und dieses individuell antreiben. Hierdurch kann sowohl ein Vorwärts- und Rückwärtsfahren als auch eine Änderung der Fahrtrichtung direkt über die Räder, welche in ihrer Ausrichtung starr sind, bewirk werden. Dies kann beispielsweise durch Antreiben der Räder in unterschiedliche Richtungen und/oder durch Antreiben der Räder mit unterschiedlichen/individuellen Umdrehungsgeschwindigkeiten erfolgen. Die Lenkvorrichtung wird demnach durch die individuell antreibbaren Räder gebildet. Hierdurch kann auch die Bewegung und/oder Drehung der Flugzeugtreppe mit einer, vorzugsweise stufenlos, einstellbaren und veränderbaren Geschwindigkeit erfolgen. Bevorzugt ist jedem Rad ein eigener Motor zugeordnet oder mit diesem verbunden. Der Motor kann auch in das Rad oder in die Nabe des jeweiligen Rades integriert sein. Der Motor kann mit der Nabe alternativ oder ergänzend antreibend in Verbindung stehen.

Eine bevorzugte Weiterbildung der Erfindung besteht darin, dass auf der Seite der Flugzeugtreppe, auf welcher das obere Ende der Flugzeugtreppe, insbesondere eine Kanzel der Flugzeugtreppe, vorgesehen ist, mindestens ein Abstandssensor, insbesondere ein Ultraschall-, Infrarot- oder optischer Sensor, vorgesehen ist, welcher ausgebildet ist, einen Abstand der Flugzeugtreppe zu einem Objekt, insbesondere einem Flugzeugrumpf, zu bestimmen. Die von dem mindestens einen Abstandssensor erfassten Werte beziehungsweise Daten können an den Sender übermittelt werden und so das Rangieren im Nahbereich des Flugzeugs vereinfachen. Dies ist insbesondere im Hinblick auf eine berührungsfreie Ausrichtung der Treppe gegenüber dem Flugzeug vorteilhaft, wie sie international vorgeschrieben ist. Treppe und Flugzeug sollen sich also nicht berühren. Des Weiteren kann der mindestens eine Abstandssensor eine automatische Annäherung der Flugzeugtreppe an das Flugzeug, insbesondere ohne steuernde Einflussnahme durch das Personal, ermöglichen. Dies kann insbesondere im Nahbereich der Treppe zum Flugzeug, also bei einem Abstand von ca. 2 Metern, vorzugsweise 1 Meter, besonders bevorzugt von 50 cm, erfolgen. Somit kann die Flugzeugtreppe 3-stufig an das Flugzeug angenähert werden:
1. bis zur Sicherheitsmarkierung um das Flugzeug (in der Regel 30 Meter) als Anhänger,
2. als gesteuerte Flugzeugtreppe, welche vom Zugfahrzeug abgekoppelt ist und mittels der angetriebenen Räder bewegbar ist und
3. als automatisierte Bewegung der Flugzeugtreppe und Annäherung der selbigen an das Flugzeug im Nahbereich. Grundsätzlich kann der 2. Schritt ausgelassen werden, indem der 3. Schritt schon direkt nach dem Abkoppeln am Sicherheitsbereich um das Flugzeug erfolgt.

Der mindestens eine Abstandssensor oder mindestens ein weiterer Sensor, insbesondere ein Laser, kann ausgebildet sein, einen vertikalen und/oder einen horizontalen Randbereich eines Einstiegs am Flugzeug oder eine sonstige Markierung am Flugzeug zu erkennen. Die Ausrichtung der Flugzeugtreppe gegenüber dem Flugzeug während des automatischen Fortbewegens der Treppe kann hierdurch besonders genau horizontal und vertikal einstellbar sein. Der weitere Sensor kann also den Punkt beziehungsweise Bereich, insbesondere den Einstieg am Flugzeug, erfassen, zu welchem die Flugzeugtreppe automatisiert verfahren werden soll. Durch Kombination der Abstandsmessung durch den mindestens einen Abstandssensor sowie der Bestimmung des Zielpunktes, insbesondere der Ausrichtung gegenüber dem Einstieg am Flugzeug, kann die Steuerungseinrichtung eine Route berechnen, um den Einstieg am Flugzeug durch entsprechende Ansteuerung der angetriebenen Räder zu erreichen. Der Abstandssensor kann des Weiteren ausgebildet sein, die Flugzeugtreppe möglichst parallel zu dem Einstieg am Flugzeug auszurichten. Vorzugsweise ist hierfür mindestens ein zweiter Abstandssensor vorgesehen, welcher parallel zu dem ersten Abstandssensor angeordnet ist und ausgerichtet ist, eine Abstandsmessung in die grundsätzlich selbe Richtung vorzunehmen wie der erste Abstandssensor. Messen der erste und der zweite Abstandssensor jeweils denselben Abstand zum Flugzeug, ist die Flugzeugtreppe in etwa parallel zu dem Flugzeug ausgerichtet.

Nach einer besonders vorteilhaften Weiterbildung der Erfindung ist es vorgesehen, dass der Aufgang der Flugzeugtreppe höhenverstellbar ausgebildet ist und/oder veränderbar, insbesondere zwischen einer bodennahen Transportposition und mindesten einer, vorzugsweise mehreren, oberhalb der Transportposition befindlichen Einstiegsposition gelagert ist. Insbesondere hinsichtlich auf Flugfeldern vorkommender starker Windböen ist es vorteilhaft, die Flugzeugtreppe während des Transports im angehängten Zustand möglichst aerodynamisch vorzusehen. Hierfür kann der Treppenaufgang mit der am oberen Ende des Aufgangs vorgesehenen Kanzel absenkbar beziehungsweise herunter klappbar ausgebildet sein, wodurch die frontale und seitliche Angriffsfläche für Windböen gegenüber einer aufgerichteten Position reduziert ist. Je nach Flugzeugtyp sind unterschiedliche Einstiegshöhen vorgesehen. Diese können standardisiert sein, weswegen sie abrufbar, beispielsweise im Steuergerät oder dem Sender, hinterlegt sein können. Hierdurch ist die Flugzeugtreppe für eine Vielzahl von unterschiedlichen Flugzeugtypen verwendbar und auf diese anpassbar. Nach einer bevorzugten Ausführungsform ist es vorgesehen, dass die Höhenverstellung der Flugzeugtreppe hydraulik-frei betreibbar ist. Hubkolben, wie sie beispielsweise an Kränen zum Einsatz kommen, um eine Höhe beziehungsweise Neigung eines Auslegers zu verändern, sind durch die Höhe des Druckrohr beziehungsweise die Länge der Kolbenstange in ihrer maximalen und insbesondere minimalen Höhenverstellbarkeit beschränkt. Hierdurch wäre ein Herabsenken der Kanzel bis in etwa in den Bereich der Räder verhindert.

Besonders bevorzugt ist es nach einer Weiterbildung der Erfindung, dass die Flugzeugtreppe ausgebildet ist, eine Änderung der Einstiegshöhe eines Flugzeugs zu erfassen, und/oder dass die Flugzugtreppe ausgebildet ist, die Treppenhöhe an die erfasste Änderung der Einstiegshöhe, insbesondere im unbelasteten Zustand, anzupassen. Die Flugzeugtreppe ist dann unbelastet, wenn keine Passagiere oder andere zusätzliche Gewichte auf dieser vorzufinden sind. Die Erfassung einer Änderung der Einstiegshöhe eine Flugzeugs, wie sie beispielsweise durch Betanken des Flugzeugs und damit verbundener Absenkung des Flugzeugrumpfs auftritt, erfordert eine Korrektur der Höhenausrichtung der Flugzeugtreppe, insbesondere falls diese vor der Änderung der Einstiegshöhe bereits am Flugzeug positioniert wurde. Sollte keine Anpassung der Höhe der Flugzeugtreppe auf die Einstiegshöhe am Flugzeug erfolgen, kann, beispielsweise durch Betankung und damit verbundener Gewichtserhöhung des Flugzeugs, eine Stufe von bis zu 50 cm oder mehr entstehen, welche für Passagiere unter normalen Umständen nicht ohne weiteres überwindbar ist. Hierfür kann der mindestens eine weitere Sensor ausgebildet sein, die Markierung am Flugzeug oder den horizontalen Randbereich eines Einstiegs zu überwachen und gegebenenfalls eine Korrektur der Ausrichtung der Treppe gegenüber dem Flugzeug zu signalisieren. Grundsätzlich können alle erfindungsgemäßen beziehungsweise bevorzugten Sensoren mit der Steuereinrichtung verbunden sein und Messsignale an die selbige übermitteln, woraufhin die Steuerungseinrichtung die Höhenverstellung oder die Antriebe der Räder ansteuert einen Vorgang (Bewegung der Treppe, Einstellen einer an das Flugzeug angepassten Einstiegshöhe an der Kanzel) oder eine Korrektur von beispielsweise Abstand, Ausrichtung oder Höhe der Kanzel an die Einstiegshöhe des Flugzeugs vorzunehmen. Im Vergleich zu einem Einstellen einer Einstiegshöhe in Abhängigkeit von einem spezifischen Flugzeugtyp stellt die Anpassung der Einstiegshöhe an eine Veränderung der Einstiegshöhe am Flugzeug eine Feinabstimmung dar.

Besonders bevorzugt ist es nach einer Weiterbildung der Erfindung, dass die Kanzel in der Transportposition bodennah vorgesehen ist, vorzugsweise auf einem unteren Bereich der Flugzeugtreppe aufliegt. Die Höhenverstellung der Flugzeugtreppe kann insbesondere mit einer angetriebenen Spindel oder einem klappbaren Mechanismus ausgebildet sein, welcher ein Herablassen des Treppenaufgangs vorzugsweise bis in die Nähe der Räder ermöglicht.

Eine bevorzugte Weiterbildung der Erfindung besteht darin, dass der untere Bereich der Flugzeugtreppe eine höhere Masse als ein oberer Bereich, insbesondere als ein Treppenaufbau der Flugzeugtreppe, aufweist. Hierdurch kann ein besonders niedriger Schwerpunkt erreicht werden, der zusätzlich oder alternativ zu dem Herablassen des Treppenaufgangs die Windstabilität der Flugzeugtreppe, insbesondere beim Transport aber auch im Übrigen, bewirken kann.

Die Flugzeugtreppe kann mit einem Empfänger versehen sein, der die Antriebsvorrichtung steuert. Die Antriebsvorrichtung kann ein integraler Bestandteil des Rades sein, also beispielsweise nach Art eines selbstbalancierenden Elektro-Scooters, bei welchem der Elektroantrieb in dem Rad beziehungsweise als Teil des Rades vorgesehen ist.

Der Betreiber, also die steuernde Person, kann mit einer Steuervorrichtung für den Empfänger ausgestattet sein. Die Antriebsvorrichtung kann auch mindestens ein herkömmlicher Verbrennungsmotor sein, der vorzugsweise mindestens eines der Räder antreibt.

Der Betreiber kann die Flugzeugtreppe mit einem Schlepper bis in die Nähe des Flugzeuges fahren, dort die Flugzeugtreppe vom Schlepper lösen und anschließend diese mittels der Antriebsvorrichtung und der Lenkvorrichtung an das Flugzeug in die entsprechende Betriebsposition bringen.

Gemäß einer weiteren Ausbildung der Erfindung ist der Empfänger über Kabel mit der Steuervorrichtung verbunden, die als Schalttafel ausgebildet ist.

Gemäß einer weiteren Ausbildung der Erfindung ist die Schalttafel als Handsteuergerät ausgebildet.

Gemäß einer weiteren Ausbildung der Erfindung ist die Schalttafel an der Flugzeugtreppe befestigt.

Diese weiteren Ausbildungen der Erfindung ermöglichen eine drahtgebundene Lösung der Aufgabe der Erfindung, wobei diese Lösung die Kosten für die Bewegung der Flugzeugtreppe erheblich senkt.

Gemäß einer weiteren Ausbildung der Erfindung sind der Empfänger als Funkempfänger und die Schalttafel als Fernsteuervorrichtung ausgebildet.

Gemäß einer weiteren Ausbildung der Erfindung ist die Fernsteuervorrichtung ein Mobiltelefon.

Die beiden letztgenannten weiteren Ausbildungen der Erfindung sorgen dafür, dass für die Steuerung der Funkweg verwendet wird und dass die Benutzung der Flugzeugtreppe nur von dem hierfür vorgesehenen Betreiber vorgenommen werden kann.

Gemäß einem nicht beanspruchten Beispiel kann eine Lenkvorrichtung eine handbetätigte Deichsel aufweisen. Dieses Beispiel besticht durch ihre Einfachheit. Vorzugsweise ist die Deichsel ausfahrbar zwischen einer eingefahrenen Position und einer ausgefahrenen Benutzungsposition gelagert. Erfindungsgemäß ist die Lenkvorrichtung, ergänzend zu der Deichsel, mit individuell antreibbaren Rädern ausgebildet, welche die angetriebenen Räder zur Fortbewegung der Flugzeugtreppe sein können.

Die Erfindung wird nun anhand eines Ausführungsbeispiels näher erläutert.

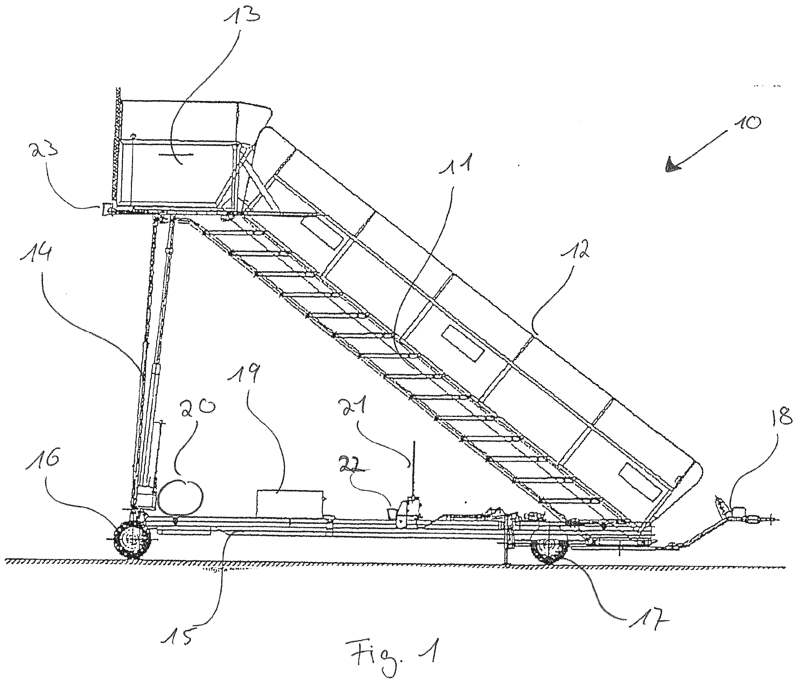

Die beigefügte Figur 1 zeigt eine Seitenansicht einer selbstfahrenden Flugzeugtreppe.

Die Flugzeugtreppe 10 weist eine schräggestellte Treppe 11 mit Seitengeländer 12 auf, die am oberen Ende eine an das Flugzeug anstellbare Kanzel 13 trägt. Die Kanzel 13 kann durch Stützen 14 auf einem Grundgestell 5 abgestützt sein, wobei die Stützen eine Höhenverstellung der Treppe, insbesondere der Kanzel, ermöglichen können. Alternativ hierzu kann eine höhenverstellbare Spindel oder ein Klappmechanismus vorgesehen sein, welche ein besonders bodennahes Herablassen der Treppe ermöglichen. Das Grundgestell 15 kann am vorderen Ende zwei Räder 16 und in der Nähe des hinteren Endes mindestens zwei Räder 17 tragen, von denen nur das linke zu sehen ist. Zwei der Räder, insbesondere der vorderen Räder 16, können von einem Elektromotor angetrieben sein. In nicht beanspruchten Beispielen kann die horizontale Ausrichtung der Räder mittels einer Deichsel 18 veränderbar sein, wobei die hinteren Räder 17 über einen Drehtisch mit der Deichsel 18 in Verbindung stehen.

Somit kann ein horizontales Ausrichten beziehungsweise ein horizontales Verändern der Position der Deichsel eine Änderung der Ausrichtung der nicht-angetriebenen Räder unmittelbar zur Folge haben. Im Gegensatz hierzu kann bei zwei erfindungsgemäß angetriebenen Rädern ein Richtungswechsel durch unterschiedliches Antreiben der einzelnen Räder bewirkt werden, wie voranstehend beschrieben wurde. Hierbei kann auf eine bewegliche Deichsel verzichtet werden, wobei frei drehbare nicht-angetriebene Räder als hintere Räder 17 vorgesehen sind.

Der mindestens eine Elektromotor 20 steht mit mindestens einem der vorderen Räder 16 in antreibender Verbindung und kann von einem auf dem Grundgestell 15 befestigten Akkumulator 19 über einen Funkempfänger 21 mit Antenne 11 gespeist werden. Der Funkempfänger 21 empfängt die von einer nicht dargestellten Steuervorrichtung des Betreibers, beispielsweise eines Mobiltelefons, ausgehenden Funkwellen, die nach einem wählbaren Programm, beispielsweise einer entsprechenden App, kodiert sind. So lassen sich die Fahrgeschwindigkeit und/oder die Richtung beziehungsweise Richtungsänderung der Flugzeugtreppe einstellen und/oder verändern.

## Patentansprüche

1. Flugzeugtreppe (10) mit Rädern (16, 17) sowie einer Lenkvorrichtung,
wobei die Flugzeugtreppe (10) mindestens ein Rad (17) ohne Antrieb aufweist,
wobei zwei der Räder (16) antreibbar und in ihrer Ausrichtung starr sind, und
wobei eine steuerbare Antriebsvorrichtung vorgesehen ist, welche mit den zwei angetriebenen Rädern (16) zusammenarbeitet,
**dadurch gekennzeichnet,**
**dass** jedem angetriebenen Rad ein eigener Antrieb zugeordnet ist oder ein gemeinsamer Antrieb vorgesehen ist, welcher ausgebildet ist, die angetriebenen Räder (16) individuell anzutreiben, und, dass die angetriebenen Räder (16) gemeinsam die Lenkvorrichtung bilden, wobei die Räder (17) ohne Antrieb frei drehbar ausgebildet sind.

2. Flugzeugtreppe (10) nach Anspruch 1,
**dadurch gekennzeichnet,**
**dass** der mindestens eine Antrieb (20) individuell ansteuerbar und/oder von dem jeweiligen Rad (16) entkoppelbar ist.

3. Flugzeugtreppe (10) nach einem der Ansprüche 1 oder 2,
**dadurch gekennzeichnet,**
**dass** das mindestens eine antriebslose Rad (16), mit einer lösbaren Dreh- und/oder Rollsperre ausgebildet ist.

4. Flugzeugtreppe (10) nach einem der Ansprüche 1 bis 3,
**dadurch gekennzeichnet,**
**dass** eine Steuervorrichtung (22) vorgesehen ist, welche mit der Antriebsvorrichtung steuernd in Verbindung steht und als Steuermittel einen Sender (21) sowie einen Empfänger aufweist, wobei der Sender mit einer Schalttafel ausgebildet ist.

5. Flugzeugtreppe (10) nach Anspruch 4,
**dadurch gekennzeichnet,**
**dass** die Schalttafel als Handsteuergerät ausgebildet ist.

6. Flugzeugtreppe (10) nach einem der Ansprüche 4 und 5,
**dadurch gekennzeichnet,**
**dass** der Empfänger (21) als Funkempfänger und die Schalttafel als Fernsteuervorrichtung ausgebildet sind.

7. Flugzeugtreppe (10) nach Anspruch 6,
**dadurch gekennzeichnet,**
**dass** die Fernsteuervorrichtung ein Mobiltelefon ist.

8. Flugzeugtreppe (10) nach einem der Ansprüche 1 bis 7,
**dadurch gekennzeichnet,**
**dass** auf der Seite der Flugzeugtreppe (10), auf welcher das obere Ende der Flugzeugtreppe (10), insbesondere eine Kanzel (13) der Flugzeugtreppe (10), vorgesehen ist, mindestens ein Abstandssensor (23), insbesondere ein Ultraschall-, Infrarot- oder optischer Sensor, vorgesehen ist, welcher ausgebildet ist, einen Abstand der Flugzeugtreppe (10) zu einem Objekt, insbesondere einem Flugzeugrumpf, zu bestimmen.

9. Flugzeugtreppe (10) nach einem der Ansprüche 1 bis 8,
**dadurch gekennzeichnet,**
**dass** ein Aufgang (11) der Flugzeugtreppe (10) höhenverstellbar ausgebildet ist und/oder veränderbar, insbesondere zwischen einer bodennahen Transportposition und mindesten einer, vorzugsweise mehreren, oberhalb der Transportposition befindlichen Einstiegsposition gelagert ist.

10. Flugzeugtreppe (10) nach einem der Ansprüche 1 bis 9,
**dadurch gekennzeichnet,**
**dass** die Flugzeugtreppe (10) eine Einrichtung aufweist, welche ausgebildet ist, eine Änderung der Einstiegshöhe eines Flugzeugs zu erfassen, und, dass die Flugzeugtreppe (10) ausgebildet ist, die Treppenhöhe an die erfasste Änderung der Einstiegshöhe, insbesondere im unbelasteten Zustand, anzupassen.

11. Flugzeugtreppe (10) nach Anspruch 8,
**dadurch gekennzeichnet,**
**dass** die Kanzel (13) in der Transportposition bodennah vorgesehen ist, vorzugsweise auf einem unteren Bereich der Flugzeugtreppe (10) aufliegt.

12. Flugzeugtreppe (10) nach einem der Ansprüche 1 bis 11,
**dadurch gekennzeichnet,**
**dass** der untere Bereich der Flugzeugtreppe (10) eine höhere Masse als ein oberer Bereich, insbesondere als ein Treppenaufbau der Flugzeugtreppe, aufweist.

## Claims

1. Aircraft stairs (10) with wheels (16, 17) as well as a steering device,
wherein the aircraft stairs (10) comprises at least one wheel (17) without a drive,
wherein two of the wheels (16) are drivable and rigid in their orientation, and wherein a controllable drive device is provided which cooperates with the two driven wheels (16)
**characterised in that**
**in that** each driven wheel is assigned its own drive or a common drive is provided which is designed to drive the driven wheels (16) individually, and
**in that** the driven wheels (16) together form the steering device, the wheels (17) being designed to be freely rotatable without drive.

2. Aircraft stairs (10) according to claim 1,
**characterised in that**
**in that** the at least one drive (20) can be individually controlled and/or decoupled from the respective wheel (16).

3. Aircraft stairs (10) according to one of claims 1 or 2,
**characterised in that**
**in that** the at least one wheel (16) without a drive is designed with a releasable rotation and/or rolling lock.

4. Aircraft stairs (10) according to any one of claims 1 to 3,
**characterised in that**
**in that** a control device (22) is provided which is in controlling communication with the drive device and has a transmitter (21) and a receiver as control means, the transmitter being designed with a control panel.

5. Aircraft stairs (10) according to claim 4,
**characterised in that**
that the control panel is designed as a manual control unit.

6. Aircraft stairs (10) according to any of claims 4 and 5,
**characterised in that**
**in that** the receiver (21) acts as a radio receiver and the control panel acts as a remote control device.

7. Aircraft stairs (10) according to claim 6,
**characterised in that**
that the remote-control device is a mobile phone.

8. Aircraft stairs (10) according to any one of claims 1 to 7,
**characterised in that**
that at least one distance sensor (23), in particular an ultrasonic, infrared or optical sensor, is provided on the side of the aircraft staircase (10) on which the upper end of the aircraft staircase (10), in particular a cockpit (13) of the aircraft staircase (10), is provided, which is designed to determine a distance of the aircraft staircase (10) from an object, in particular an aircraft fuselage.

9. Aircraft stairs (10) according to any one of claims 1 to 8,
**characterised in that**
that a stairway (11) of the aircraft stairway (10) is designed to be adjustable in height and/or is mounted so as to be variable, in particular between a transport position close to the ground and at least one, preferably several, entry position located above the transport position.

10. Aircraft stairs (10) according to any one of claims 1 to 9,
**characterised in that**
**in that** the aircraft staircase (10) has a device which is designed to detect a change in the boarding height of an aircraft, and **in that** the aircraft staircase (10) is designed to adapt the staircase height to the detected change in the boarding height, in particular in the unloaded state.

11. Aircraft stairs (10) according to claim 8,
**characterised in that**
that the pulpit (13) is provided close to the ground in the transport position, preferably resting on a lower region of the aircraft stairs (10).

12. Aircraft stairs (10) according to any one of claims 1 to 11,
**characterised in that**
**in that** the lower region of the aircraft staircase (10) has a higher mass than an upper region, in particular as a staircase structure of the aircraft staircase.

## Revendications

1. Descente d'avion (10) avec des roues (16,17) et avec aussi un pilotage où la descente d'avion (10) présente au minimum une roue (17) sans entraînement où deux des roues (16) sont commandables et rigides dans leur alignement et où un dispositif d'entraînement est prévu collaborant avec les deux roues (16) entraînées est **caractérisée** de sorte qu'une propre commande est affectée à chaque roue entraînée ou à une commande commune qui est prévue qui est formée pour entraîner les roues (16) entraînées à titre individuel et que les roues (16) entraînées forment communément le pilotage où les roues (17) sont formées sans entraînement librement tournables.

2. Descente d'avion (10) selon la revendication 1 est **caractérisée** de sorte que l'entraînement (20) est pilotable au minimum à titre individuel et/ou est découplé de la roue (16) respective.

3. Descente d'avion (10) selon l'une des revendications 1 ou 2 est **caractérisée** de sorte qu'au minimum une roue (16) non moteur est formée avec un tourniquet amovible et/ou un système anti-recul.

4. Descente d'avion (10) selon l'une des revendications 1 jusqu'à 3 est **caractérisée** de sorte qu'un dispositif de commande (22) est prévu qui est en relation avec le dispositif d'entraînement au pelage et qui présente en qualité de moyen de commande un émetteur (21) et un récepteur où l'émetteur est formé avec un panneau de commande.

5. Descente d'avion (10) selon la revendication 4 est **caractérisée** de sorte que le panneau de commande est formé en qualité de commande manuelle.

6. Descente d'avion (10) selon l'une des revendications 4 et 5 est **caractérisée** de sorte que le récepteur (21) est formé en qualité de récepteur radio, tandis que le panneau de commande en qualité de dispositif de télécommande.

7. Descente d'avion (10) selon la revendication 6 est **caractérisée** de sorte que Le dispositif de télécommande est un cellulaire.

8. Descente d'avion (10) selon l'une des revendications 1 jusqu'à 7 est **caractérisée** de sorte que sur la partie de la descente d'avion (10) sur laquelle la fin supérieure de la descente d'avion (10), particulièrement une chaire (13) de la descente d'avion (10), est prévue, au minimum un détecteur de proximité (23), en particulier un capteur ultrason, infrarouge ou optique est prévu qui est formé pour déterminer la distance entre la descente d'avion (10) vers un objet, en particulier vers le fuselage d'aéronef.

9. Descente d'avion (10) selon l'une des revendications 1 jusqu'à 8 est **caractérisée** de sorte qu'un escalier (11) de la descente d'avion (10) est formé réglable en hauteur et/ou modifiable en particulier entre une position de transport troposphérique et est au minimum stocké dans une position d'installation ou de plusieurs à titre préférentiel se trouvant au-dessus de la position de transport.

10. Descente d'avion (10) selon l'une des revendications 1 jusqu'à 9 est **caractérisée** de sorte que la descente d'avion (10) présente un dispositif qui est formé pour détecter le changement de la hauteur libre comprise d'un avion et que la descente d'avion (10) est formé pour adapter la hauteur des escaliers au changement détecté de la hauteur libre comprise, en particulier dans un état non sollicité.

11. Descente d'avion (10) selon la revendication 8 est **caractérisée** de sorte que la chaire (13) est prévue à titre troposphérique dans la position de transport, reposant à titre préférentiel sur une zone inférieure de la descente d'avion (10).

12. Descente d'avion (10) selon l'une des revendications 1 jusqu'à 11 est **caractérisée** de sorte que la partie inférieure de la descente d'avion (10) présente une masse supérieure à la zone supérieure, en particulier en qualité de cage d'escaliers de la descente d'avion.
